# EUROPEAN PATENT APPLICATION

(11) **EP 3 248 723 A1**
(43) Date of publication of application: **29.11.2017**
(21) Application number: 17167964.0
(22) Date of filing: 25.04.2017
(51) Int. Cl.: B23H 7/26, B23H 9/14, B23H 9/10, B23H 7/30

(54) **ELECTRICAL DISCHARGE MACHINING APPARATUS**

(30) Priority: 24.05.2016 GB 201609080
(71) Applicant: Rolls-Royce plc, London SW1E 6AT (GB)
(72) Inventor: Lilburne, James, Derby, Derbyshire DE24 8BJ (GB); McManus, Liam, Derby, Derbyshire DE24 8BJ (GB); Andrew, Sophie, Derby, Derbyshire DE24 8BJ (GB); Lee, JunLong, Derby, Derbyshire DE24 8BJ (GB)
(74) Representative: Rolls-Royce plc

(57) **Abstract**

Electrical discharge machining apparatus comprising: a first housing (12) defining an aperture (18) for receiving a dielectric fluid; a resilient member (14) defining one or more apertures for receiving one or more electrodes (42) therein; and a second housing (16) defining one or more apertures for receiving the one or more electrodes, and a surface to cause compression of the resilient member to hold the one or more electrodes when the first housing and the second housing are brought together.

## Description

### TECHNOLOGICAL FIELD

The present disclosure concerns electrical discharge machining apparatus.

### BACKGROUND

Electrical discharge machining (EDM) machines may be used in various industries to machine an article. For example, in aerospace an EDM machine may be used to form cooling holes in turbine blades. In operation, an EDM machine removes material from the article using a series of electrical discharges between one or more electrodes of the EDM machine and the article. The one or more electrodes and the article do not directly contact one another, but are separated by a dielectric fluid.

### BRIEF SUMMARY

According to various examples there is provided electrical discharge machining apparatus comprising: a first housing defining an aperture for receiving a dielectric fluid; a resilient member defining one or more apertures for receiving one or more electrodes therein; and a second housing defining one or more apertures for receiving the one or more electrodes, and a surface to cause compression of the resilient member to hold the one or more electrodes when the first housing and the second housing are brought together.

The first housing may define a cavity. The aperture of the first housing may extend into the cavity. The resilient member may be positioned within the cavity.

The second housing may include a protrusion defining the surface of the second housing. The protrusion may be configured to enter the cavity of the first housing to cause compression of the resilient member when the first housing and the second housing are brought together.

The electrical discharge machining apparatus may further comprise a guide member positioned between the aperture of the first housing and the resilient member. The guide member may define one or more conduits for guiding dielectric fluid from the aperture of the first housing to the one or more electrodes.

The one or more conduits of the guide member may be configured to receive the one or more electrodes therein. Alternatively, the one or more conduits may be configured to provide dielectric fluid to the one or more electrodes, but not receive the one or more electrodes therein.

The one or more conduits may include a first portion and a second portion. A longitudinal axis of the second portion may define an angle with a longitudinal axis of the first portion. The interface between the first portion and the second portion may restrict movement of the one or more electrodes through the one or more conduits.

The one or more conduits may include a first conduit and a second conduit. The first portion of the first conduit may have a greater length than the first portion of the second conduit.

The electrical discharge machining apparatus may further comprise a fastener arrangement configured to fasten the second housing to the first housing.

The fastener arrangement may include a plurality of bolts for fastening the second housing to the first housing.

The fastener arrangement may include a quick release skewer.

The electrical discharge machining apparatus may further comprise a frame having a first end and a second opposite end. The first housing and the second housing may be movable relative to the frame between the first end and second end.

The electrical discharge machining apparatus may further comprise a spring coupled between the first housing and/or the second housing, and the first end of the frame. The spring may be arranged to bias the first housing and/or the second housing towards the first end of the frame.

The electrical discharge machining apparatus may further comprise a ratchet coupled between the first housing and/or the second housing, and the frame. The ratchet may be arranged to restrict movement of the first housing and/or the second housing towards the first end of the frame.

The electrical discharge machining apparatus may further comprise one or more pins for locating in one or more holes in the first housing and/or the second housing to align the first housing and the second housing as the first housing and the second housing are brought together.

The electrical discharge machining apparatus may further comprise one or more electrodes positioned within the one or more apertures of the resilient member and within the one or more apertures of the second housing. The resilient member may be configured to compress the one or more electrodes when compressed by the surface of the second housing.

According to various examples there is provided an electrical discharge machine comprising electrical discharge machining apparatus as described in any of the preceding paragraphs.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION

Embodiments will now be described by way of example only, with reference to the Figures, in which:
Fig. 1 illustrates a schematic cross sectional view of electrical discharge machining apparatus according to various examples;
Fig. 2 illustrates a schematic cross sectional view of another electrical discharge machining apparatus according to various examples;
Fig. 3 illustrates a schematic cross sectional view of a guide member according to various examples;
Fig. 4 illustrates a schematic cross sectional view of a further electrical discharge machining apparatus according to various examples;
Fig. 5 illustrates a schematic cross sectional view of another electrical discharge machining apparatus according to various examples;
Fig. 6 illustrates a schematic cross sectional view of a further electrical discharge machining apparatus according to various examples;
Fig. 7 illustrates a front view of an electrical discharge machining apparatus according to various examples;
Figs. 8A, 8B and 8C illustrate front views of the electrical discharge machining apparatus illustrated in Fig. 7 being loaded with electrodes;
Figs. 9A, 9B and 9C illustrate front views of the electrical discharge machining apparatus illustrated in Fig. 7 during machining of an article; and
Fig. 10 illustrates a schematic diagram of an electrical discharge machining machine according to various examples.

### DETAILED DESCRIPTION

In the following description, the terms 'connected' and 'coupled' mean operationally connected and coupled. It should be appreciated that there may be any number of intervening components between the mentioned features, including no intervening components.

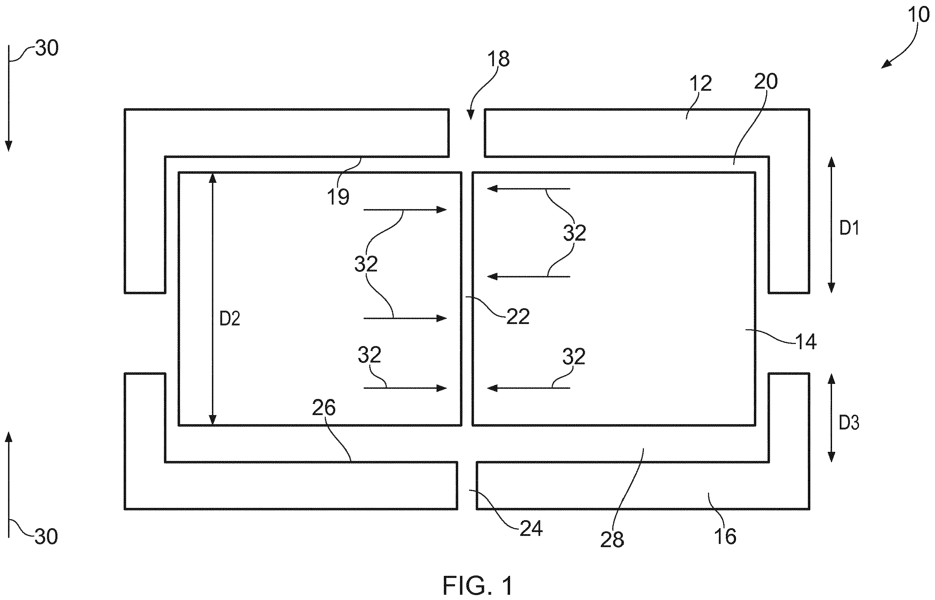

Fig. 1 illustrates electrical discharge machining (EDM) apparatus 10 according to various examples. The electrical discharge machining apparatus 10 includes a first housing 12, a resilient member 14, and a second housing 16. The electrical discharge machining apparatus 10 may be used to machine an aerospace article such as a turbine blade. The electrical discharge machining apparatus 10 may also be used to machine articles for other industries. For example, the electrical discharge machining apparatus 10 may be used in the manufacture of spinnerets for the formation of synthetic fibres such as rayon. The electrical discharge machining apparatus 10 may also be referred to as a 'cartridge' for an EDM machine.

The first housing 12 may comprise any suitable material such as any non-corrosive material (for example, anodised aluminium, stainless steel, titanium, nickel). The first housing 12 may have any suitable shape for housing at least the resilient member 14 and defines an aperture 18 for receiving a dielectric fluid. For example, the aperture 18 may be coupled to a conduit (such as a flexible pipe) that is connected to a reservoir of dielectric fluid and a pump for pumping the dielectric fluid from the reservoir to the aperture 18. The first housing 12 defines a surface 19 and the resilient member 14 is positioned adjacent the surface 19. The first housing 12 may also define a cavity 20 having a depth D1 and the resilient member 14 may be positioned at least partially within the cavity 20. The aperture 18 may extend through the first housing 12 and into the cavity 20.

The resilient member 14 may comprise any suitable resilient material such as an elastomer (for example, a homogenous material such as silicon or rubber) and may have any suitable shape that enables the resilient member 14 to be housed within the first housing 12 and the second housing 16. The resilient member 14 defines one or more apertures 22 for receiving one or more electrodes therein respectively. When uncompressed, the resilient member 14 has a depth D2.

The second housing 16 may comprise any suitable material such as any non-corrosive material (for example, anodised aluminium, stainless steel, titanium, nickel). The second housing 16 may have any suitable shape for housing at least the resilient member 14. The second housing 16 defines one or more apertures 24 for receiving the one or more electrodes therein respectively. When the resilient member 14 is housed by the first housing 12 and the second housing 16, the one or more apertures 22 of the resilient member 14 are aligned with the one or more apertures 24 of the second housing 16. Consequently, the one or more electrodes may extend through the one or more apertures 22 of the resilient member 14 and through the one or more apertures 24 of the second housing 16. The second housing 16 also defines a surface 26 and the resilient member 14 is positioned adjacent the surface 26. The second housing 16 may also define a cavity 28 having a depth D3 and the resilient member 14 may be positioned at least partially within the cavity 28.

The sum of the depth D1 of the first housing 12 and the depth D3 of the second housing 16 is less than the depth D2 of the resilient member 14. Consequently, when the first housing 12 and the second housing 16 are brought together (as indicated by arrows 30 illustrated in Fig 1), the resilient member 14 is compressed between the surface 19 of the first housing 12 and the surface 26 of the second housing 16. The compression of the resilient member 14 deforms the resilient member 14 as indicated by arrows 32 and causes the resilient member 14 to hold the one or more electrodes in position and provide a seal around the one or more electrodes to prevent the flow of dielectric fluid through the one or more apertures 22.

It should be appreciated that in other examples, the first housing 12 may be planar and not define the cavity 20. Alternatively, the second housing 16 may be planar and not define the cavity 28.

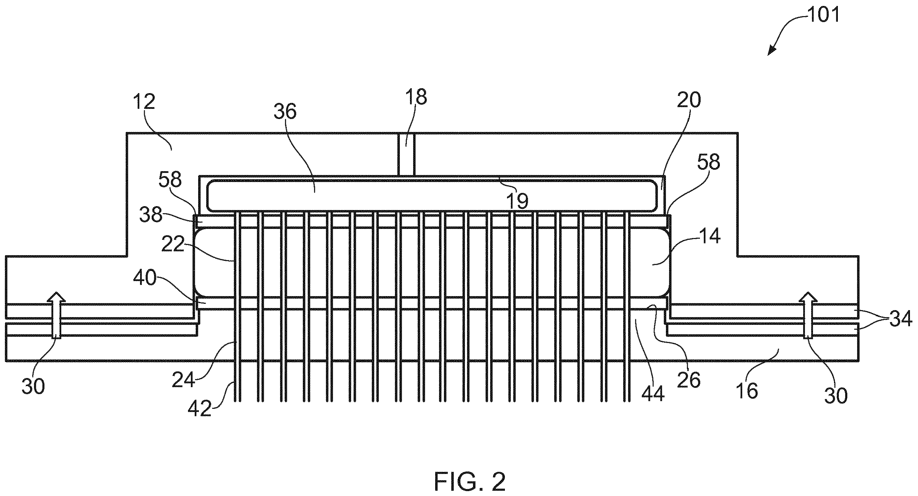

Fig. 2 illustrates another electrical discharge machining apparatus 101 according to various examples. The electrical discharge machining apparatus 101 is similar to the electrical discharge machining apparatus 10 and where the features are similar, the same reference numerals are used. The electrical discharge machining apparatus 101 may also be referred to as a cartridge of an EDM machine.

The electrical discharge machining apparatus 101 differs from the electrical discharge machining apparatus 10 in that the electrical discharge machining apparatus 101 further comprises a fastener arrangement 34, a guide member 36, a first plate 38, a second plate 40, and a plurality of electrodes 42.

The electrical discharge machining apparatus 101 also differs from the electrical discharge machining apparatus 10 in that the second housing 16 does not define the cavity 28 and instead defines a protrusion 44 that includes the surface 26. The protrusion 44 is configured to enter the cavity 20 of the first housing 12 to cause compression of the resilient member 14 when the first housing 12 and the second housing 16 are brought together.

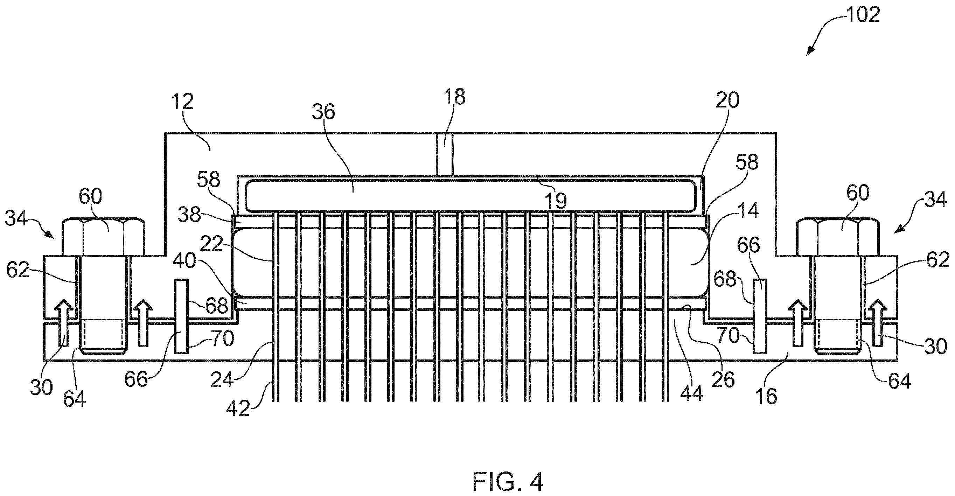

The fastener arrangement 34 is configured to fasten the second housing 16 to the first housing 12. The fastener arrangement 34 may comprise any suitable mechanism for fastening the first and second housings 12, 16 together. For example, the fastener arrangement 34 may comprise any of the mechanisms illustrated in Figs. 4, 5 and 6 and described in detail in the following paragraphs.

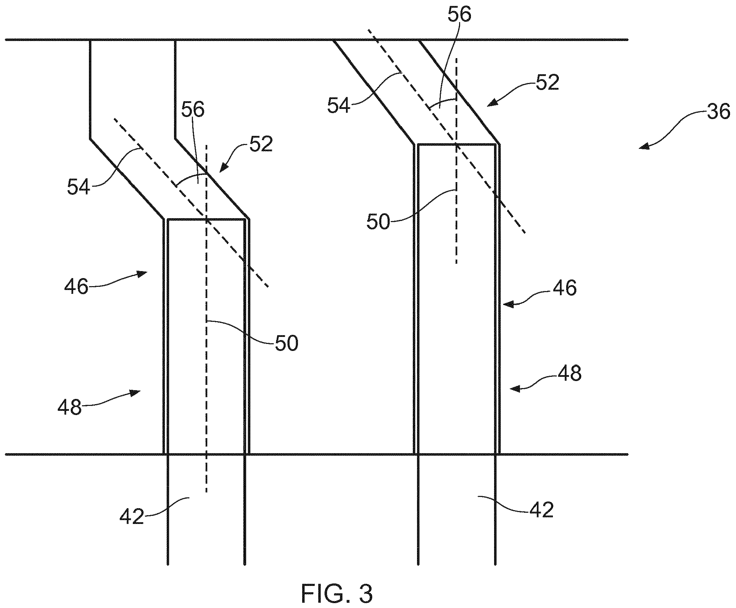

The guide member 36 may comprise any suitable material and comprise, for example any plastic that has good water absorption resistance (for example, acrylic or acrylonitrile butadiene styrene). The guide member 36 is positioned between the surface 19 (and thus the aperture 18) of the first housing 12 and the resilient member 14. The guide member 36 defines one or more conduits for guiding dielectric fluid from the aperture 18 of the first housing 12 to the one or more electrodes 42. In the example illustrated in Fig. 3, the guide member 36 defines two conduits 46 where one electrode 42 is positioned in each of the conduits 46 for receiving dielectric fluid.

The conduits 46 each include at least a first portion 48 having a longitudinal axis 50 and a second portion 52 having a longitudinal axis 54. The longitudinal axis 54 of the second portion 52 may define an angle 56 with the longitudinal axis 50 of the first portion 48 (that is, the conduits 46 may each have a bend along their lengths). The angle 56 may be the same for each of the conduits 46, or may be different for at least some of the conduits 46.

The length of the first portion 48 of each of the conduits 46 may be the same, or may be different for at least some of the conduits 46. For example, Fig. 3 illustrates that the length of the first portion 48 of the left conduit 46 is less than the length of the first portion 48 of the right conduit 46. Consequently, the guide member 36 may advantageously determine the profile of the electrodes 42 for machining an article and may be manufactured using a three dimensional printing process so that the guide member 36 is bespoke for a particular article or type of articles (turbine blades for example).

In other examples, the conduits 46 may be straight, and instead, the first portion 48 may be sized to allow an electrode 42 to be positioned therein, and the second portion 52 may be sized to prevent an electrode 42 from being positioned therein. As mentioned in the example above, the lengths of the first portions 48 of the conduits 46 may be different to one another and thus provide a shaped profile for the electrodes 42.

The first and second plates 38, 40 comprise a relatively hard material such as soda-lime glass (also referred to as "green glass"). The first plate 38 is positioned between the guide member 36 and the resilient member 14, and the second plate 40 is positioned between the resilient member 14 and the second housing 16. Consequently, the resilient member 14 is sandwiched between the first and second plates 38, 40 so that when the first and second housings 12, 16 are brought towards one another, the resilient member 14 is compressed by the first and second plates 38, 40.

The first housing 12 may define a flange 58 within the cavity 20 for supporting the first plate 38. When the first and second housings 12, 16 are brought towards one another, the flange 58 provides a reactionary force towards the first plate 38 and may prevent the first plate 38 from contacting the guide member 36 during compression of the resilient member 14.

The electrodes 42 are elongate in shape and define a conduit that allows the ingress of dielectric fluid at a first end (that is, the end at the guide member 36) and the egress of dielectric fluid at a second opposite end. The electrodes 42 may comprise any suitable material and may comprise brass, copper, or tungsten carbide.

Fig. 4 illustrates a cross sectional side view of a further electrical discharge machining apparatus 102 according to various examples. The electrical discharge machining apparatus 102 is similar to the electrical discharge machining apparatus 101 and where the features are similar, the same reference numerals are used. The electrical discharge machining apparatus 102 may also be referred to as a cartridge of an EDM machine.

In these examples, the fastener arrangement 34 includes a plurality of bolts 60, a plurality of holes 62 in the first housing 12, and a plurality of threaded blind holes 64 in the second housing 16. The first housing 12 and the second housing 16 may be fastened together by bringing the first and second housings 12, 16 together, inserting the plurality of bolts 60 into the holes 62, and then rotating the bolts 60 using a spanner or a hex key so that the bolts 60 move into the threaded blind holes 64. As the bolts 60 are rotated, the first and second housings 12, 16 are brought closer together and the protrusion 44 moves into the cavity 20 of the first housing 12 and causes compression of the resilient member 14.

The electrical discharge machining apparatus 102 also includes one or more pins 66 for locating in one or more holes 68, 70 in the first housing 12 and/or the second housing 16 to align the first housing 12 and the second housing 16 when the first housing 12 and the second housing 16 are brought together. In some examples, the one or more pins 66 may be integral with the first housing 12 and may be inserted into the one or more holes 70 in the second housing 16. In other examples, the one or more pins 66 may be integral with the second housing 16 and may be inserted into the one or more holes 68 in the first housing 12. In further examples, the one or more pins 66 may be separate to the first housing 12 and the second housing 16 and may be inserted into the holes 68, 70 of one of the first and second housings 12, 16 to assist with alignment of the first and second housings 12, 16 as the first and second housings 12, 16 are brought together.

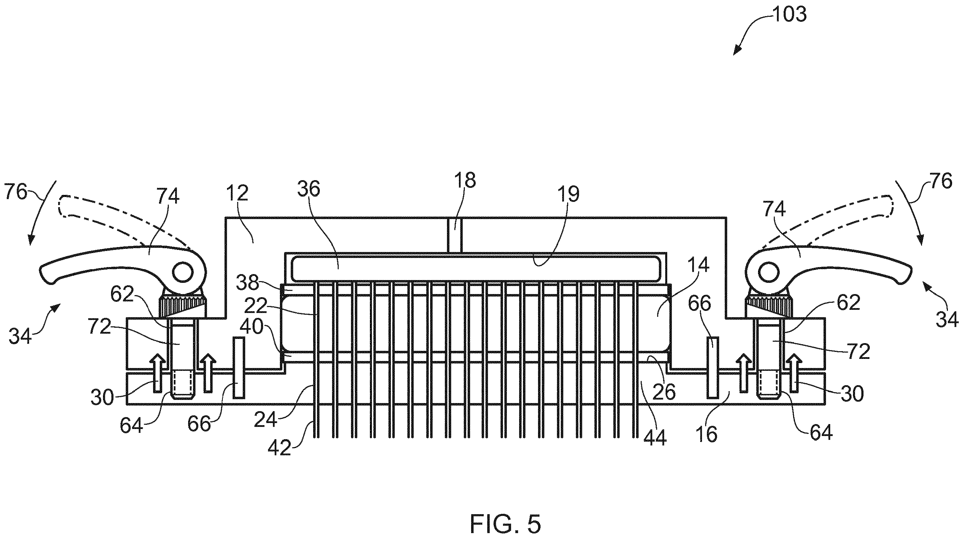

Fig. 5 illustrates a cross sectional side view of another electrical discharge machining apparatus 103 according to various examples. The electrical discharge machining apparatus 103 is similar to the electrical discharge machining apparatus 101 and 102 and where the features are similar, the same reference numerals are used. The electrical discharge machining apparatus 103 may also be referred to as a cartridge for an EDM machine.

In these examples, the fastener arrangement 34 includes one or more quick release skewers that comprise a rod 72 threaded at one end and a lever operated cam assembly 74 at the other end. The first housing 12 and the second housing 16 may be brought together and fastened by rotating the lever operating cam assembly 74 downwards as indicated by arrows 76 in Fig. 5.

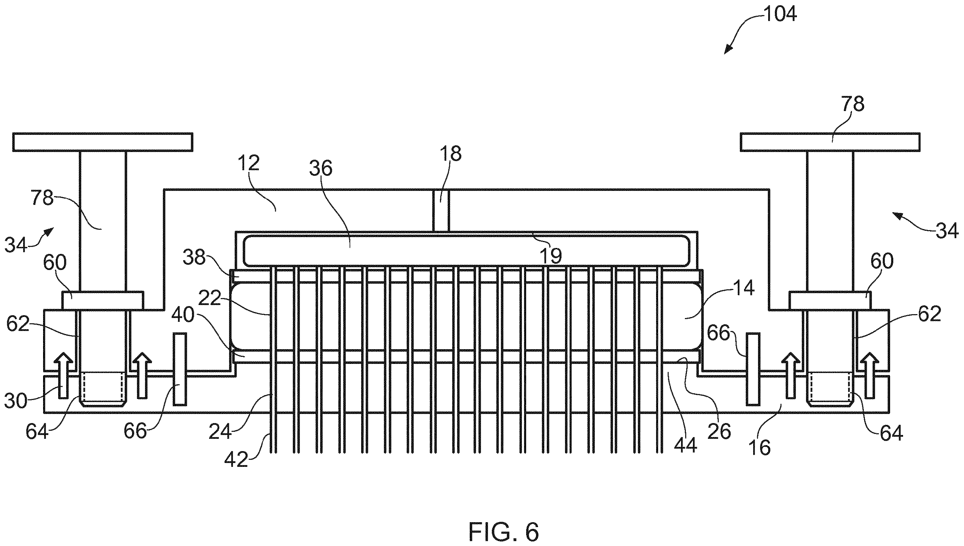

Fig. 6 illustrates a cross sectional side view of a further electrical discharge machining apparatus 104 according to various examples. The electrical discharge machining apparatus 104 is similar to the electrical discharge machining apparatus 101, 102, 103 and where the features are similar, the same reference numerals are used. The electrical discharge machining apparatus 104 may also be referred to as a cartridge for an EDM machine.

In these examples, the fastener arrangement 34 includes a T-Bar bolt arrangement comprising a plurality of bolts 60 and a plurality of handles 78. Each handle of the plurality of handles 78 is coupled to one bolt of the plurality of bolts 60. The first housing 12 and the second housing 16 may be fastened together by bringing the first and second housings 12, 16 together, and then rotating the bolts 60 using the handles 78 so that the bolts 60 move into the threaded blind holes 64.

It should be appreciated that in other examples, the holes 64 illustrated in Figs. 4 and 6 may be through-holes and the first and second housings 12, 16 may be fastened together using a nut for each of the bolts 60. Similarly, the holes 64 illustrated in Fig. 5 may be through-holes and the first and second housings 12, 16 may be fastened together using a nut for each of the rods 72.

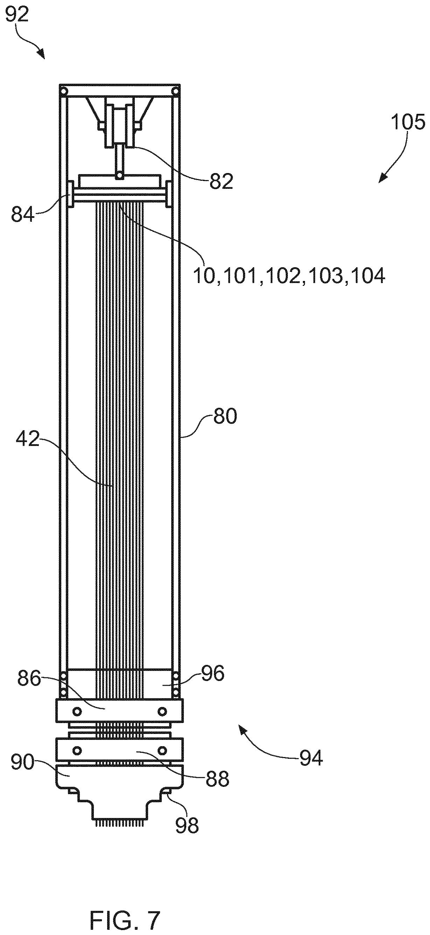

Fig. 7 illustrates a front view of an electrical discharge machining apparatus 105 according to various examples. The electrical discharge machining apparatus 105 includes an electrical discharge machining apparatus 10, 101, 102, 103, 104 as illustrated in any of Figs. 1, 2, 4, 5 and 6, a frame 80, a spring 82, a ratchet 84, an electrical discharge machining clamp 86, a replenish clamp 88, a nose guide 90, an upper back plate 96 and a nose guide back plate 98. The electrical discharge machining apparatus 105 may be referred to as a tool head for an EDM machine.

The frame 80 may have any suitable shape (for example, the frame 80 may be rectangular as illustrated in Fig. 7) and may comprise any suitable materials such as any non-corrosive material (for example, anodised aluminium or stainless steel). The frame 80 has a first end 92 and a second opposite end 94 that define the short sides of the frame 80 and are separated by the long sides of the frame 80. The electrical discharge machining apparatus 10, 101, 102, 103, 104 is positioned within the frame 80 and is movable relative to the frame 80 between the first end 92 and second end 94.

The spring 82 is coupled between the first housing 12 and/or the second housing 16, and the first end 92 of the frame 80. The spring 82 is arranged to bias the first housing 12 and/or the second housing 16 (and therefore the electrical discharge machining apparatus 10, 101, 102, 103, 104) towards the first end 92 of the frame 80. In other words, the spring 82 exerts a force on the electrical discharge machining apparatus 10, 101, 102, 103, 104 towards the first end 92 of the frame 80.

The ratchet 84 is coupled between the first housing 12 and/or the second housing 16, and the long sides of the frame 80. The ratchet 84 is arranged to restrict movement of the first housing 12 and/or the second housing 16 (and therefore the electrical discharge machining apparatus 10, 101, 102, 103, 104) towards the first end 92 of the frame 80. The ratchet 84 includes a rack that extends along the long side of the frame 80 and a pawl that is coupled to the electrical discharge machining apparatus 10, 101, 102, 103, 104. The pawl of the ratchet 84 may be rotated away from the rack of the ratchet 84 to enable the electrical discharge machining apparatus 10, 101, 102, 103, 104 to be moved towards the first end 92 of the frame 80.

The electrical discharge machining clamp 86 is connected to the upper back plate 96 at the second end 94 of the frame 80. The upper back plate 96 is connected to the frame 80 at the second end 94 of the frame 80. When the electrical discharge machining apparatus 105 is included as part of an electrical discharge machining (EDM) machine, the upper back plate 96 (and all coupled components such as the frame 80) may be moved relative to the remainder of the EDM machine. The electrical discharge machining clamp 86 is configured to couple the electrodes 42 to the upper back plate 96.

The replenish clamp 88 is configured to couple the electrodes 42 to the nose guide back plate 98. As illustrated in Fig. 7, the replenish clamp 88 is positioned adjacent the second end 94 of the frame 80. When the electrical discharge machining apparatus 105 is included as part of an EDM machine, the nose guide back plate 98 is fixed in position so that the upper back plate 96 is moveable relative to the nose guide back plate 98.

The nose guide 90 is positioned adjacent the replenish clamp 88 and is coupled to the nose guide back plate 98. The nose guide 90 is configured to support the electrodes 42.

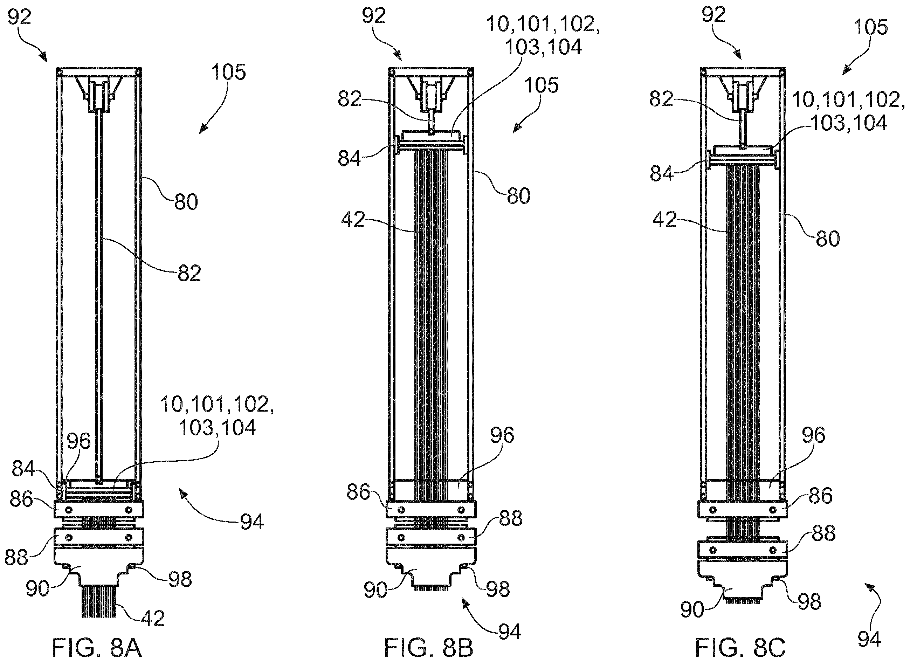

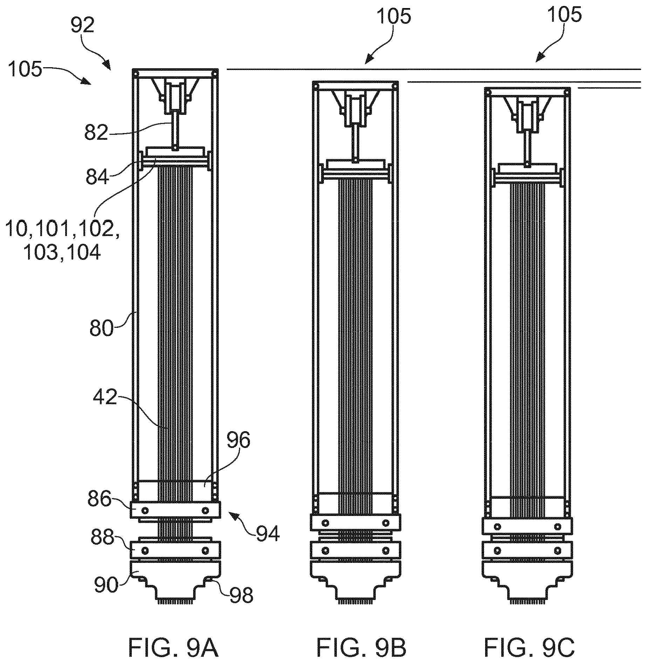

The operation of the electrical discharge machining apparatus 105 is described in the following paragraphs with reference to Figs. 8A, 8B, 8C, 9A, 9B, and 9C.

In more detail, Figs. 8A, 8B and 8C illustrate front views of the electrical discharge machining machine 105 being loaded with electrodes 42.

At Fig. 8A, the electrical discharge machining apparatus 10, 101, 102, 103, 104 is positioned at the second end 94 of the frame 80 (the ratchet 84 preventing the spring 82 from moving the electrical discharge machining apparatus 10, 101, 102, 103, 104 towards the first end 92 of the frame 80). The electrodes 42 are loaded into the electrical discharge machining apparatus 10, 101, 102, 103, 104 and the first housing 12 and the second housing 16 are separate from one another to allow the electrodes 42 to be inserted through the resilient member 14.

At Fig. 8B, the first housing 12 and the second housing 16 have been brought together to compress the resilient member 14 to hold the electrodes 42 in position relative to the electrical discharge machining apparatus 10, 101, 102, 103, 104. The pawl of the ratchet 84 has also been moved to allow the electrical discharge machining apparatus 10, 101, 102, 103, 104 to be moved to the first end 92 of the frame 80 and so that the electrodes 42 are positioned within the frame 80 and extend between the first and second ends 92, 94.

At Fig. 8C, the electrical discharge machining apparatus 105 is configured to be loaded into an electrical discharge machining machine. In more detail, the replenish clamp 88 has been engaged to couple the electrodes 42 to the nose guide back plate 98. The frame 80, the upper back plate 96, and the (disengaged) electrical discharge machining clamp 86 are moved upwards. The spring 82 is extended since the electrodes 42 are held by the fixed replenish clamp 88 and the electrical discharge machining apparatus 10, 101, 102, 103, 104 is fixed in position relative to the replenish clamp 88 due to the resilient member 14 holding the electrodes 42.

Figs. 9A, 9B and 9C illustrate front views of the electrical discharge machining apparatus 105 during machining of an article. At Fig. 9A, the electrical discharge machining clamp 86 is engaged and the replenish clamp 88 is disengaged. Consequently, the electrodes 42 are coupled to the upper back plate 96 instead of the nose guide back plate 98 and the frame 80 may be moved downwards to machine an article as required (as illustrated in Figs. 9A, 9B, 9C by the downwards movement of the frame 80).

During machining of an article, the material of the electrodes 42 is removed and the electrodes 42 get progressively shorter. The replenishment, redressing and machining steps (as illustrated in Figs. 8A, 8B, 8C, 9A, 9B, 9C) may be repeated a number of times with the same electrodes 42 until the electrical discharge machining apparatus 10, 101, 102, 103, 104 is positioned at the second end 94 of the frame 80. The electrodes 42 may then be removed so that new electrodes may be loaded into the electrical discharge machining apparatus 105 as illustrated in Fig. 8A.

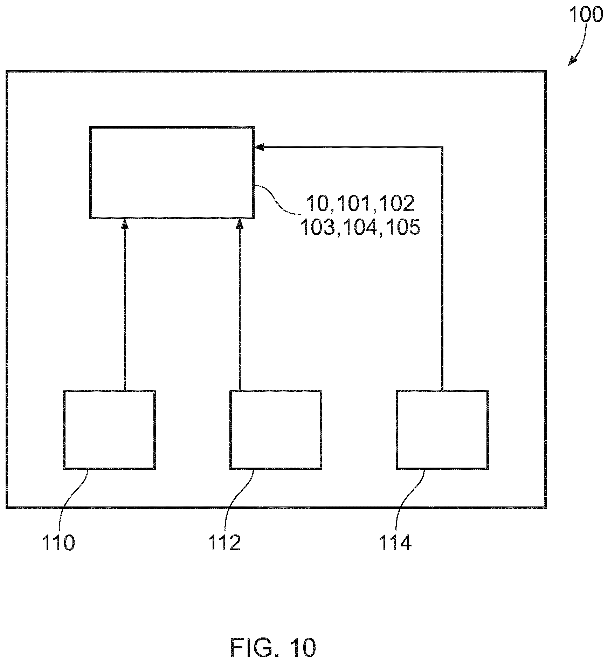

Fig. 10 illustrates a schematic diagram of an electrical discharge machining (EDM) machine 100 according to various examples. The EDM machine 100 includes an electrical discharge machining apparatus 10, 101, 102, 103, 104, 105, one or more actuators 110 (such as one or more servomotors) for moving the upper back plate 96 relative to the nose guide 90 during machining of an article, a reservoir of dielectric fluid and pump arrangement 112 for supplying dielectric fluid to the electrical discharge machining apparatus 10, 101, 102, 103, 104, 105, and an electrical power source for supplying electricity to the electrical discharge machining apparatus 10, 101, 102, 103, 104, 105 to enable the electrodes 42 to generate electrical discharges.

The electrical discharge machining apparatus 10, 101, 102, 103, 104, 105 may provide several advantages. First, the electrical discharge machining apparatus 10, 101, 102, 103, 104 may be smaller and may weigh less than similar apparatus in existing EDM machines due to the arrangement of the first housing 12, the resilient member 14 and the second housing 16. Consequently, the first housing 12 and/or the second housing 16 may have thicker walls and be manufactured from higher grade materials (such as stainless steel or titanium) and this may reduce the likelihood of the first housing 12 and/or second housing 16 cracking during use.

Second, longer electrodes may be used in the electrical discharge machining apparatus 10, 101, 102, 103, 104, 105 than in existing similar apparatus because the electrical discharge machining apparatus 10, 101, 102, 103, 104 may weigh less than equivalent apparatus in existing EDM machines. This may result in a smaller proportion of the electrode length being wasted and may consequently reduce the operating cost of the electrical discharge machining apparatus 10, 101, 102, 103, 104, 105.

Third, the first housing 12, the second housing 16 and the resilient member 14 may provide an improved seal for the dielectric fluid when compared to existing EDM machines. In particular, the first housing 12, the second housing 16 and the resilient member 14 are arranged to hold the electrodes 42 without requiring pressure from the flow of the dielectric fluid to hold the electrodes 42. Consequently, there is a reduced likelihood that dielectric fluid may leak from the electrical discharge machining apparatus 10, 101, 102, 103, 104.

Fourth, the electrodes 42 may be loaded relatively quickly and easily into the electrical discharge machining apparatus 105 when compared to existing EDM machines. The electrodes 42 may be loaded into the electrical discharge machining apparatus 105 while the electrical discharge machining apparatus 10, 101, 102, 103, 104 is positioned at the second end 94 of the frame 80 and there is a relatively short distance from the nose guide 90 through which to move the electrodes 42.

Fifth, the loading of the electrical discharge machining apparatus 10, 101, 102, 103, 104, 105 within an EDM machine may be easier for an operator to perform. In particular, the electrodes 42 may be held in position by the resilient member 14 when the electrical discharge machining apparatus 10, 101, 102, 103, 104, 105 is carried to and loaded into the EDM machine. This may reduce the likelihood of the electrodes 42 falling out of the electrical discharge machining apparatus 10, 101, 102, 103, 104, 105 while being carried.

It will be understood that the invention is not limited to the embodiments above-described and various modifications and improvements can be made without departing from the concepts described herein. For example, the different embodiments may take the form of an entirely hardware embodiment, an entirely software embodiment, or an embodiment containing both hardware and software elements.

Except where mutually exclusive, any of the features may be employed separately or in combination with any other features and the disclosure extends to and includes all combinations and sub-combinations of one or more features described herein.

## Claims

1. Electrical discharge machining apparatus comprising:
a first housing defining an aperture for receiving a dielectric fluid;
a resilient member defining one or more apertures for receiving one or more electrodes therein; and
a second housing defining one or more apertures for receiving the one or more electrodes, and a surface to cause compression of the resilient member to hold the one or more electrodes when the first housing and the second housing are brought together.

2. Electrical discharge machining apparatus as claimed in claim 1, wherein the first housing defines a cavity and the aperture of the first housing extends into the cavity, the resilient member being positioned within the cavity.

3. Electrical discharge machining apparatus as claimed in claim 1 or 2, wherein the second housing includes a protrusion defining the surface of the second housing, wherein the protrusion is configured to enter the cavity of the first housing to cause compression of the resilient member when the first housing and the second housing are brought together.

4. Electrical discharge machining apparatus as claimed in any of the preceding claims, further comprising a guide member positioned between the aperture of the first housing and the resilient member, the guide member defining one or more conduits for guiding dielectric fluid from the aperture of the first housing to the one or more electrodes.

5. Electrical discharge machining apparatus as claimed in claim 4, wherein the one or more conduits of the guide member are configured to receive the one or more electrodes therein.

6. Electrical discharge machining apparatus as claimed in claim 5, wherein the one or more conduits include a first portion and a second portion, a longitudinal axis of the second portion defining an angle with a longitudinal axis of the first portion.

7. Electrical discharge machining apparatus as claimed in claim 6, wherein the one or more conduits includes a first conduit and a second conduit, the first portion of the first conduit having a greater length than the first portion of the second conduit.

8. Electrical discharge machining apparatus as claimed in any of the preceding claims, further comprising a fastener arrangement configured to fasten the second housing to the first housing.

9. Electrical discharge machining apparatus as claimed in claim 8, wherein the fastener arrangement includes a plurality of bolts for fastening the second housing to the first housing, or wherein the fastener arrangement includes a quick release skewer.

10. Electrical discharge machining apparatus as claimed in any of the preceding claims, further comprising a frame having a first end and a second opposite end, the first housing and the second housing being movable relative to the frame between the first end and second end.

11. Electrical discharge machining apparatus as claimed in claim 10, further comprising a spring coupled between the first housing and/or the second housing, and the first end of the frame, the spring being arranged to bias the first housing and/or the second housing towards the first end of the frame.

12. Electrical discharge machining apparatus as claimed in claim 10 or 11, further comprising a ratchet coupled between the first housing and/or the second housing, and the frame, the ratchet being arranged to restrict movement of the first housing and/or the second housing towards the first end of the frame.

13. Electrical discharge machining apparatus as claimed in any of the preceding claims, further comprising one or more pins for locating in one or more holes in the first housing and/or the second housing to align the first housing and the second housing as the first housing and the second housing are brought together.

14. Electrical discharge machining apparatus as claimed in any of the preceding claims, further comprising one or more electrodes positioned within the one or more apertures of the resilient member and within the one or more apertures of the second housing, the resilient member being configured to compress the one or more electrodes when compressed by the surface of the second housing.

15. An electrical discharge machine comprising electrical discharge machining apparatus as claimed in any of the preceding claims.
